# EUROPEAN PATENT APPLICATION

(11) **EP 2 565 833 A1**
(43) Date of publication of application: **06.03.2013**
(21) Application number: 12182055.9
(22) Date of filing: 28.08.2012
(51) Int. Cl.: G06Q 10/10

(54) **Apparatus and method for managing data transmission/reception in mobile terminal**

(30) Priority: 01.09.2011 KR 20110088367
(71) Applicant: Samsung Electronics Co., Ltd., Suwon-si, Gyeonggi-do, 443-742 (KR)
(72) Inventor: Kim, Ji-Hye, Gyeonggi-do 443-742 (KR)
(74) Representative: Harrison Goddard Foote

(57) **Abstract**

An apparatus for managing data transmission/reception in a mobile terminal is provided. The apparatus includes a memory for storing identification information for displaying data selected from a data transmission/reception history list, and a controller for generating and storing identification information for transmitted/received data, and for displaying original data of the selected data based on identification information of the data selected from the data transmission/reception history list.

## Description

### BACKGROUND OF THE INVENTION

### Field of the Invention:

The present invention relates to an apparatus and method for managing data transmission/reception in a mobile terminal. More particularly, the present invention relates to a data transmission/reception management apparatus and method for allowing a user to view data selected from a data transmission/reception history list regardless of the type of data in a mobile terminal.

### Description of the Related Art:

Various applications are provided for a mobile terminal that supports wireless communication. During execution of these various applications, various types of data may be stored in the mobile terminal. For example, text messages, time information, calendar information, and the like may be stored as non-file type data. Similarly, videos, photos, music, and the like may be stored as file type data.

These various types of data may be transmitted and received (or exchanged) between mobile terminals that support wireless communications such as Wi-Fi and Bluetooth. If a user desires to determine a history of data transmission/reception, the mobile terminal may store transmission/reception data in a database (DB) and provide the stored data as a data transmission/reception history list.

When application data is selected for transmission, the selected data (i.e., both non-file type data and file type data) is generated in a temporary file and transmitted to the other party's mobile terminal. The generated temporary file, in which original data is stored, should be stored in a history DB to display the original data when the data is selected from a data transmission/reception history list by a user.

Even when data generated in a temporary file is received from the other party's mobile terminal, the temporary file should be stored in a history DB to display original data when the data is selected from a data transmission/reception history list by a user.

If data is selected from a data transmission/reception history list that is displayed in a history application mode, original data is displayed using a temporary file stored in the history DB and corresponding to the selected data.

When original data generated in a temporary file stored in a history DB is file type data, the original data in the temporary file may be displayed. On the other hand, if data stored in the history DB is not file type data, the original data in the temporary file may not be displayed.

In order to view the desired non-file type data, a user should enter an application mode after terminating the history application mode, and then select the data.

A temporary file having original data is stored in a history DB for a data transmission/reception history list. In conclusion, the same data is stored in a data DB and a history DB redundantly, and a deletion time of the temporary file stored in the history DB is unclear, causing a waste of memory.

### SUMMARY OF THE INVENTION

Aspects of the present invention are to address at least the above-mentioned problems and/or disadvantages and to provide at least the advantages described below. Accordingly, an aspect of the present invention is to provide a data transmission/reception management apparatus and method for allowing a user to view data selected from a data transmission/reception history list regardless of the type of the data in a mobile terminal.

Another aspect of the present invention is to provide a data transmission/reception management apparatus and method for providing a User Interface (UI) capable of running an application so as to allow a user to directly view data selected from a data transmission/reception history list in a mobile terminal.

Another aspect of the present invention is to provide a data transmission/reception management apparatus and method capable of managing a data transmission/reception history list without additional use of memory in a mobile terminal.

Another aspect of the present invention is to provide a data transmission/reception management apparatus and method capable of automatically storing and managing data selected from a data transmission/reception history list in a history database (DB) in a unified format regardless of the type of data in a mobile terminal.

Another aspect of the present invention is to provide a data transmission/reception management apparatus and method capable of providing a data transmission/reception history list so as to allow a user to directly view data transmission/reception and selected data without damaging a data DB or a correlation between elements even though various types of data are added in a mobile terminal.

In accordance with an aspect of the present invention, an apparatus for managing data transmission/reception in a mobile terminal is provided. The apparatus includes a memory for storing identification information for displaying data selected from a data transmission/reception history list, and a controller for generating and storing identification information for transmitted/received data, and for displaying original data of the selected data based on identification information of the data selected from the data transmission/reception history list.

In accordance with another aspect of the present invention, a method for managing data transmission/reception in a mobile terminal is provided. The method includes generating and storing identification information for displaying data selected from a data transmission/reception history list when data transmission/reception is performed, and, if data is selected from the data transmission/reception history list, displaying original data of the selected data based on identification information of the selected data.

Other aspects, advantages, and salient features of the invention will become apparent to those skilled in the art from the following detailed description, which, taken in conjunction with the annexed drawings, discloses exemplary embodiments of the invention.

### BRIEF DESCRIPTION OF THE DRAWINGS

The above and other aspects, features, and advantages of certain exemplary embodiments of the present invention will be more apparent from the following description taken in conjunction with the accompanying drawings, in which:
FIG. 1 illustrates a structure of a mobile terminal according to an exemplary embodiment of the present invention;
FIG. 2 illustrates a process of generating a data transmission/reception history list in a mobile terminal according to an exemplary embodiment of the present invention; and
FIG. 3 illustrates a process of displaying data selected from a data transmission/reception history list in a mobile terminal according to an exemplary embodiment of the present invention.

Throughout the drawings, it should be noted that like reference numbers are used to depict the same or similar elements, features, and structures.

### DETAILED DESCRIPTION OF EXEMPLARY EMBODIMENTS

The following description with reference to the accompanying drawings is provided to assist in a comprehensive understanding of exemplary embodiments of the invention as defined by the claims and their equivalents. It includes various specific details to assist in that understanding but these are to be regarded as merely exemplary. Accordingly, those of ordinary skill in the art will recognize that various changes and modifications of the embodiments described herein can be made without departing from the scope and spirit of the invention. In addition, descriptions of well-known functions and constructions may be omitted for clarity and conciseness.

The terms and words used in the following description and claims are not limited to the bibliographical meanings, but, are merely used by the inventor to enable a clear and consistent understanding of the invention. Accordingly, it should be apparent to those skilled in the art that the following description of exemplary embodiments of the present invention is provided for illustration purpose only and not for the purpose of limiting the invention as defined by the appended claims and their equivalents.

It is to be understood that the singular forms "a," "an," and "the" include plural referents unless the context clearly dictates otherwise. Thus, for example, reference to "a component surface" includes reference to one or more of such surfaces.

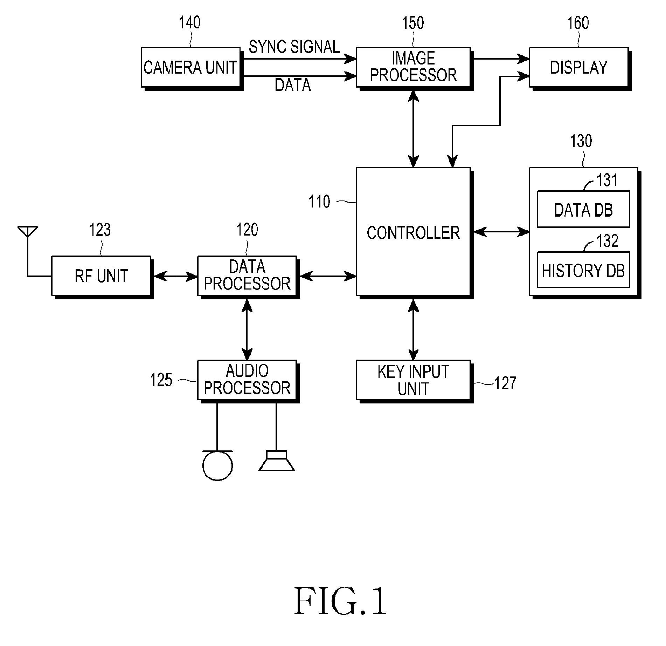

FIG. 1 illustrates a structure of a mobile terminal according to an exemplary embodiment of the present invention.

Referring to FIG. 1, a Radio Frequency (RF) unit 123 performs wireless communication of the mobile terminal. The RF unit 123 includes an RF transmitter for frequency up-converting transmission signals and amplifying the up-converted signals, and an RF receiver for low-noise-amplifying received signals and frequency down-converting the amplified signal. A data processor 120 includes a data transmitter for encoding and modulating the transmission signals, and a data receiver for demodulating and decoding the received signals. In other words, the data processor 120 may include a modem and a codec. The codec may include a data codec for processing data such as packet data, and an audio codec for processing audio signals such as voice. An audio processor 125 plays received audio signals output from the audio codec in the data processor 120 using a speaker, or transfers transmission audio signals picked up by a microphone to the audio codec in the data processor 120.

A key input unit 127 includes keys for inputting numeric and character information, and function keys for setting various functions.

A memory 130 may include a program memory and a data memory. The program memory may store programs for controlling the general operation of the mobile terminal, and programs for controlling to directly display original data of the data selected from a data transmission/reception history list regardless of the type of the data in accordance with an exemplary embodiment of the present invention. The data memory temporarily stores the data that is generated during execution of the programs.

The memory 130 includes a data database (DB) 131 for storing multiple types of data, and a history DB 132 for storing identification information for displaying data selected from a data transmission/reception history list.

The identification information stored in the history DB 132 includes information about an application and address information of data. In an exemplary implementation, the identification information is generated and stored using a Uniform Resource Identifier (URI) method.

The application information included in the identification information includes a type of an application capable of executing data selected from a data transmission/reception history list. The data address information included in the identification information includes address information for the data DB 131 in the memory 130, in which original data of the data selected from the data transmission/reception history list is stored.

A controller 110 controls the overall operation of the mobile terminal.

In accordance with an exemplary embodiment of the present invention, the controller 110 generates and stores identification information for transmitted/received data, and displays original data of selected data based on identification information of the data selected from the data transmission/reception history list.

If transmission of data is selected in an application mode, the controller 110 detects information about an application based on a type of the selected data, and detects address information of data based on an address for the data DB 131 in the memory 130, in which original data of the selected data is stored. The controller 110 generates the identification information including the detected application information and the detected data address information, and stores the generated identification information in the history DB 132 in the memory 130 as identification information of the transmission data.

If the generated identification information is stored in the history DB 132 in the memory 130, the controller 110 generates original data of the selected transmission data in a temporary file, transmits the temporary file to the other party's mobile terminal, and deletes the temporary file.

If received data generated in a temporary file is selected in an application mode, the controller 110 stores the received data, i.e., the original data generated in the temporary file, in the data DB 131 in the memory 130. The controller 110 detects information about an application based on a type of the received data, and detects address information of data based on an address for the data DB 131 in the memory 130, in which original data of the received data is stored. The controller 110 generates the identification information including the detected application information and the detected data address information, and stores the generated identification information in the history DB 132 in the memory 130 as identification information of the received data.

If the generated identification information is stored in the history DB 132 in the memory 130, the controller 110 deletes the received temporary file.

The controller 110 detects identification information of the data selected from the data transmission/reception history list of a history application mode from the history DB 132 in the memory 130. The controller 110 detects an application capable of executing the selected data based on the detected application information included in the identification information, and detects original data of the selected data from the data DB 131 in the memory 130 based on the detected data address information included in the identification information. Thereafter, the controller 110 displays the original data of the selected data by running the detected application.

A camera unit 140, which captures image data, includes a camera sensor for converting a captured optical signal into an electrical signal, and a signal processor for converting a captured analog image signal from the camera sensor into digital data. The camera sensor may include a Charge-Coupled Device (CCD) or a Complementary Metal-Oxide-Semiconductor (CMOS), and the signal processor may include a Digital Signal Processor (DSP). The camera sensor and the signal processor may be realized either integrally or separately.

An image processor 150 performs Image Signal Processing (ISP) for displaying image signals output from the camera unit 140 on a display 160. The ISP performs functions such as gamma correction, interpolation, spatial transformation, image effects, image scaling, Automatic White Balance (AWB), Automatic Exposure (AE), and Automatic Focusing (AF). Therefore, the image processor 150 processes image signals output from the camera unit 140 on a frame-by-frame basis, and outputs the frame image data according to the characteristics and size of the display 160. The image processor 150 including a video codec compresses frame image data displayed on the display 160 using a preset scheme, and decompresses compressed frame image data into original frame image data. The video codec may include a JPEG codec, an MPEG4 codec, a Wavelet codec, etc. The image processor 150 has an On Screen Display (OSD) function, and may output OSD data according to the size of the displayed screen under control of the controller 110.

The display 160 displays, on its screen, image signals output from the image processor 150 and user data output from the controller 110. The display 160 may include a Liquid Crystal Display (LCD). In this case, the display 160 may include an LCD controller, a memory capable of storing image data, and an LCD panel. When realized in a touch screen manner, the LCD may also serve as an input unit, and may display keys in the key input unit 127 on the display 160.

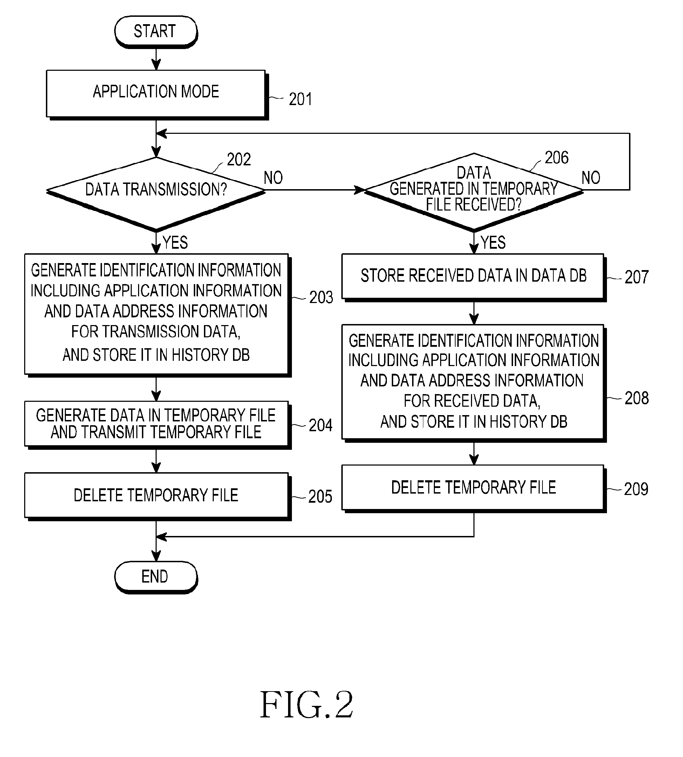

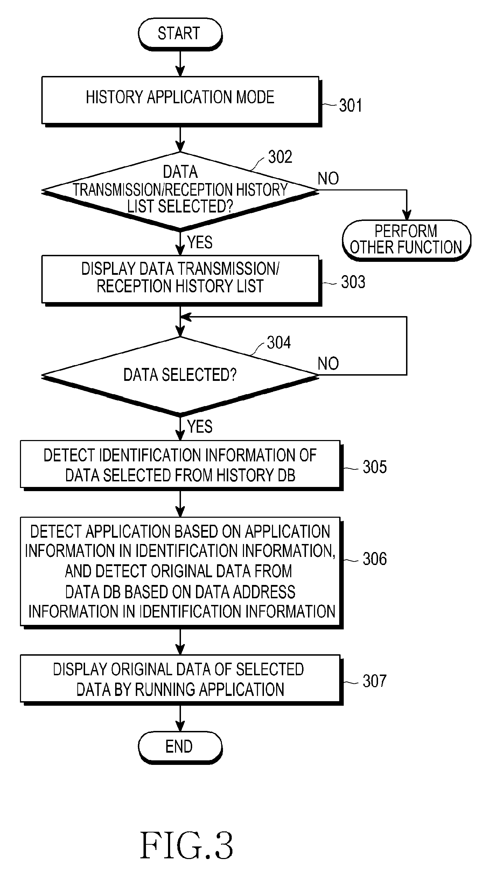

An exemplary data transmission/reception history management operation will be described with reference to FIGs. 2 and 3.

FIG. 2 illustrates a process of generating a data transmission/reception history list in a mobile terminal according to an exemplary embodiment of the present invention.

This process will be described below with reference to FIG. 1.

Referring to FIG. 2, data is stored by running an application in step 201 in which the mobile terminal is in an application mode. If transmission of specific data among the stored data is selected in step 202, the controller 110 generates and stores identification information of the selected transmission data in step 203.

In step 203, the controller 110 detects application information including a type of an application capable of executing the data based on the type of the selected transmission data. In step 203, the controller 110 detects a storage address of the data DB 131 in the memory 130, in which original data of the selected transmission data is stored, as address information of the data. In step 203, the controller 110 generates identification information based on the detected application information and the detected data address information, and stores the generated identification information in the history DB 132 in the memory 130 as identification information of the selected transmission data.

The controller 110 generates original data of the selected transmission data in a temporary file, and transmits the temporary file to the other party's mobile terminal in step 204.

The temporary file is transmitted to the other party's mobile terminal in step 204, and the controller 110 deletes the temporary file in step 205.

If it is determined in step 202 that data transmission is not selected, it is determined in step 206 if received data generated in a temporary file is selected. If it is determined in step 206 that the received data generated in a temporary file is selected, the controller 110 stores the received data, i.e., received original data generated in a temporary file, in the data DB 131 in the memory 130 in step 207.

The controller 110 generates and stores identification information of the received data in step 208.

In step 208, the controller 110 detects application information including a type of an application capable of executing the data based on the type of the received data. In step 208, the controller 110 detects a storage address of the data DB 131 in the memory 130, in which the received data is stored in step 207, as address information of the data. In step 208, the controller 110 generates identification information based on the detected application information and the detected data address information, and stores the identification information in the history DB 132 in the memory 130 as identification information of the received data. In an exemplary implementation, the identification information may comprise a URI.

If the identification information is stored in the history DB 132 in the memory 130 as identification information of the received data in step 208, the controller 110 deletes the received temporary file in step 209.

Although identification information of data is generated and stored every time the data is transmitted/received in an exemplary embodiment of the present invention, only application information in the identification information may be added in a temporary file that is transmitted during data transmission.

Therefore, a mobile terminal receiving a temporary file may detect the application information in the identification information of the received data, from the temporary file.

FIG. 3 illustrates a process of displaying data selected from a data transmission/reception history list in a mobile terminal according to an exemplary embodiment of the present invention.

This process will be described below with reference to FIG. 1.

Referring to FIG. 3, the mobile terminal enters a history application mode in step 301. If a data transmission/reception history list is selected in step 302, the controller 110 displays the data transmission/reception history list representing the transmission/reception history of data in step 303. On the other hand, if a data transmission/reception history list is not selected in step 302, the mobile terminal performs another function.

It is determined in step 304 if data is selected. If data is selected in step 304 while the data transmission/reception history list is being displayed in step 303, the controller 110 detects identification information of the data selected from the history DB 132 in the memory 130 in step 305. In an exemplary implementation, the identification information may comprise a URI.

In step 306, the controller 110 detects a type of an application capable of executing the selected data based on the application information included in the detected identification information, and detects a storage address of the data DB 131 in the memory 130, in which original data of the selected data is stored, based on the data address information included in the detected identification information.

In step 307, the controller 110 displays the original data of the selected data, which is detected in step 306, by running the application detected in step 306.

If a type of the application capable of executing the selected data is not detected by the mobile terminal in step 306, the controller 110 may download the application.

As is apparent from the foregoing description, exemplary embodiments of the present invention provide a data transmission/reception management apparatus and method for a mobile terminal, making it possible to display selected data by directly running an application as a viewer regardless of the type of data in a data transmission/reception history list. In an exemplary implementation, only a URI is stored in the history DB as identification information rather than actual data, making it possible to manage transmission/reception data using less memory. In addition, exemplary embodiments of the present invention may provide a data transmission/reception history list capable of allowing a user to directly view data transmission/reception and selected data without the damage of a data DB or a correlation between elements even though various types of data are added in a mobile terminal.

While the invention has been shown and described with reference to certain exemplary embodiments thereof, it will be understood by those skilled in the art that various changes in form and details may be made therein without departing from the spirit and scope of the invention as defined by the appended claims and their equivalents.

## Claims

1. An apparatus for managing data transmission/reception in a mobile terminal, the apparatus comprising:
a memory for storing identification information for displaying data selected from a data transmission/reception history list; and
a controller for generating and storing identification information for transmitted/received data, and for displaying original data of the selected data based on identification information of the data selected from the data transmission/reception history list.

2. The apparatus of claim 1, wherein the identification information includes information about an application and address information of data, and
wherein the identification information includes a Uniform Resource Identifier (URI).

3. The apparatus of claim 2, wherein the application information includes a type of an application capable of executing the data selected from the data transmission/reception history list, and
wherein the data address information includes address information for a data database (DB) in the memory, in which original data of the data selected from the data transmission history list is stored.

4. The apparatus of claim 1, wherein the memory includes:
a data database DB for storing multiple types of data; and
a history DB for storing the identification information.

5. The apparatus of claim 1, wherein, when transmission of data is selected, the controller generates identification information of the selected data, stores the generated identification information in a history database (DB) in the memory as identification information of the transmission data, generates original data of the selected data in a temporary file, transmits the temporary file, and deletes the temporary file.

6. The apparatus of claim 5, wherein the controller detects application information based on the type of the selected data, detects data address information based on an address for a data DB in the memory, in which original data of the selected data is stored, and generates the identification information including the detected application information and the detected data address information.

7. The apparatus of claim 1, wherein, upon receiving data generated in a temporary file, the controller stores the received data in a data database (DB) in the memory, generates the identification information based on the received data, stores the generated identification information in a history DB in the memory as identification information of the received data, and deletes the received temporary file.

8. The apparatus of claim 7, wherein the controller detects application information based on a type of the received data, detects data address information based on an address for a data DB in the memory, in which original data of the received data is stored, and generates the identification information including the detected application information and the detected data address information.

9. The apparatus of claim 1, wherein the controller detects identification information of the data selected from the data transmission/reception history list, detects an application capable of executing the selected data based on application information included in the identification information, detects original data of the selected data from a data database (DB) in the memory based on the data address information included in the identification information, and displays the original data of the selected data by running the detected application.

10. A method for managing data transmission/reception in a mobile terminal, the method comprising:
generating and storing identification information for displaying data selected from a data transmission/reception history list when data transmission/reception is performed; and
if data is selected from the data transmission/reception history list, displaying original data of the selected data based on identification information of the selected data.

11. The method of claim 10, wherein the identification information includes information about an application and address information of data, and
wherein the identification information includes a Uniform Resource Identifier (URI).

12. The method of claim 11, wherein the application information includes a type of an application capable of executing the data selected from the data transmission/reception history list, and
wherein the data address information includes address information for a data database (DB) in a memory, in which original data of the data selected from the data transmission/reception history list is stored.

13. The method of claim 10, wherein the storing comprises:
if transmission of data is selected, generating identification information of the selected data and storing the generated identification information as identification information of the transmission data; and
generating original data of the selected data in a temporary file, transmitting the temporary file, and deleting the temporary file.

14. The method of claim 13, wherein the storing comprises:
if transmission of data is selected, detecting application information based on a type of the selected data;
detecting data address information based on an address for a data database (DB) in a memory, in which original data of the selected data is stored; and
generating the identification information including the detected application information and the detected data address information.

15. The method of claim 10, wherein the storing comprises:
upon receiving data generated in a temporary file, storing the received data in a data database (DB) in a memory;
generating the identification information based on the received data, and storing the generated identification information in a history DB in the memory as identification information of the received data; and
deleting the received temporary file.

16. The method of claim 15, wherein the storing of the generated identification information in the history DB comprises:
detecting application information based on a type of the received data;
detecting data address information based on an address for the data DB in the memory, in which the original data of the received data is stored; and
generating the identification information including the detected application information and the detected data address information.

17. The method of claim 10, wherein the displaying of original data comprises:
if data is selected from the data transmission/reception history list, detecting identification information of the selected data;
detecting an application capable of executing the selected data based on application information included in the identification information;
detecting original data of the selected data from a data database (DB) in a memory based on data address information included in the identification information; and
displaying the original data of the selected data by running the detected application.
